(19) Europäisches Patentamt
European Patent Office
Office européen des brevets

(11) **EP 4 418 017 A1**

(12) **EUROPÄISCHE PATENTANMELDUNG**

(43) Veröffentlichungstag:
**21.08.2024 Patentblatt 2024/34**

(21) Anmeldenummer: **23156437.8**

(22) Anmeldetag: **14.02.2023**

(51) Internationale Patentklassifikation (IPC):
*G01S 17/93* (2020.01)    *G01S 13/931* (2020.01)
*G01S 17/931* (2020.01)    *G01S 7/00* (2006.01)
*G01S 17/06* (2006.01)    *G01S 17/86* (2020.01)
*G01S 13/86* (2006.01)    *G01S 5/14* (2006.01)

(52) Gemeinsame Patentklassifikation (CPC):
**G01S 7/003; G01S 5/14; G01S 7/4972;
G01S 17/06; G01S 17/42; G01S 17/86;
G01S 17/87; G01S 17/931**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Leuze electronic GmbH + Co. KG
73277 Owen/Teck (DE)**

(72) Erfinder:
• **Trinh, Buu Hai Dang
44263 Dortmund (DE)**
• **Eckhardt, Hasko
72076 Tübingen (DE)**
• **Köbel, Herbert
73277 Owen/Teck (DE)**

(74) Vertreter: **Ruckh, Rainer Gerhard
Patentanwaltskanzlei Ruckh
Jurastraße 1
73087 Bad Boll (DE)**

(54) **SENSORANORDNUNG**

(57) Die Erfindung betrifft eine Sensoranordnung (1) mit wenigstens einem Sensor (3a, 3b), der zur Erfassung von Objekten innerhalb eines Schutzfelds ausgebildet ist. Die Sensoranordnung (1) umfasst eine Auswerteeinheit (4) zur Auswertung von Sensorsignalen des Sensors (3a, 3b) wobei der wenigstens eine Sensor (3a, 3b) auf einer mobilen Einheit (2) angeordnet ist. Eine Anordnung von Sensoren (3a, 3b) ist auf einer Anordnung von mobilen Einheiten vorhanden. Auf der oder jeder mobilen Einheit ist eine Empfangseinheit (5) vorhanden, die von stationären Ankerpunkten (6a bis 6d) emittierte Signale empfangen kann, wobei deren Absolutpositionen in der Auswerteeinheit (4) bekannt sind. Anhand dieser Signale ist die absolute Position der jeweiligen Empfangseinheit (5) in der Auswerteeinheit (4) bestimmbar. Aus der absoluten Position der oder jeder Empfangseinheit (5) und den Relativpositionen des oder der Sensoren (3a, 3b) zu den Empfangseinheiten (5) in der Auswerteeinheit (4) wird ein Gesamtschutzfeld (22, 22') bestehend aus Schutzfeldern des oder der Sensoren (3a, 3b) gebildet. Objekteingriffe werden im Gesamtschutzfeld (22, 22') in ein Weltkoordinatensystem umgerechnet und als Objektfeststellungssignale über eine Schnittstelle (8) ausgegeben.

**Fig. 1**

**Beschreibung**

Die Erfindung betrifft eine Sensoranordnung und ein Verfahren zum Betrieb einer Sensoranordnung.

Derartige Sensoranordnungen umfassen typischerweise einen Sensor, der auf einer mobilen Einheit wie einem Fahrzeug angeordnet ist. Mit dem Sensor wird ein Schutzfeld im Umfeld des Fahrzeugs überwacht, damit Kollisionen mit gefahrbringenden Objekten, insbesondere Personen vermieden werden.

Für einen Einsatz im Bereich der Sicherheitstechnik ist der Sensor als Sicherheitssensor ausgebildet, d.h. er weist einen fehlersicheren Aufbau auf. Der Sensor kann insbesondere als Flächendistanzsensor, d.h. scannender Distanzsensor ausgebildet sein, mit dem ein flächiger Überwachungsbereich überwacht wird. Innerhalb des Überwachungsbereichs wird ein Schutzfeld vorgegeben. Wird mit dem Sensor ein Objekt im Schutzfeld detektiert, löst dieser eine Sicherheitsfunktion aus, beispielsweise derart, dass ein Notstopp des Fahrzeugs ausgelöst wird.

Im einfachsten Fall wird für den Sensor ein festes Schutzfeld vorgegeben. Dies kann jedoch zu Komplikationen führen, wenn sich das Fahrzeug in einer Umgebung bewegt, in der stationäre, nicht gefahrbringende Objekte wie Wände, Maschinen und dergleichen vorhanden sind. Wird das Fahrzeug so bewegt, dass derartige stationäre Objekte in das Schutzfeld ragen, löst der Sensor unnötigerweise die Sicherheitsfunktion aus.

Daher ist es bekannt, im Sensor mehrere Schutzfelder abzuspeichern, die einzeln zeitabhängig oder vom Fahrzustand abhängig aktiviert werden.

Eine derartige Schutzfeld-Anpassung an die Umgebung ist jedoch aufgrund der begrenzten Anzahl abgespeicherter Schutzfelder unzureichend.

Der Erfindung liegt die Aufgabe zugrunde eine Sensoranordnung bereitzustellen, mit der eine verbesserte Schutzfeld-Überwachung durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sensor, der zur Erfassung von Objekten innerhalb eines Schutzfelds ausgebildet ist. Die Sensoranordnung umfasst wenigstens eine Auswerteeinheit zur Auswertung von Sensorsignalen des Sensors, wobei der wenigstens eine Sensor und die wenigstens eine Auswerteeinheit auf wenigstens einer mobilen Einheit angeordnet sind. Eine Anordnung von Sensoren ist auf einer Anordnung von mobilen Einheiten vorhanden. Auf der oder jeder mobilen Einheit ist eine Empfangseinheit vorhanden, die von stationären Ankerpunkten emittierte Signale empfangen kann, wobei deren Absolutpositionen in der Auswerteeinheit bekannt sind. Anhand dieser Signale ist die absolute Position der jeweiligen Empfangseinheit in der Auswerteeinheit bestimmbar. Aus der absoluten Position der oder jeder Empfangseinheit und den Relativpositionen des oder der Sensoren zu den Empfangseinheiten in der Auswerteeinheit wird ein Gesamtschutzfeld bestehend aus Schutzfeldern des oder der Sensoren gebildet. Objekteingriffe werden im Gesamtschutzfeld in ein Weltkoordinatensystem umgerechnet und als Objektfeststellungssignale über eine Schnittstelle ausgegeben.

Die Erfindung betrifft auch ein entsprechendes Verfahren.

Die erfindungsgemäße Sensoranordnung umfasst generell eine Anordnung von Sensoren auf wenigstens einer mobilen Einheit. Mit den Sensoren erfolgt eine Schutzfeld-Überwachung, um einen Kollisionsschutz für die mobile Einheit zu realisieren. Die wenigstens eine Auswerteeinheit ist vorteilhaft auch auf der mobilen Einheit angeordnet. Alternativ kann die Auswerteeinheit stationär angeordnet sein. Dann erfolgt zwischen Sensor und Auswerteeinheit eine berührungslose Datenübertragung z.B. über eine Funkstrecke.

Der Grundgedanke der Erfindung besteht darin, dass die Schutzfelder selbsttätig an die Umgebung, in der sich die oder jede mobile Einheit bewegt, angepasst werden, wodurch für jede Position einer mobilen Einheit eine optimale Schutzfeld-Überwachung gewährleistet ist.

Dies wird erfindungsgemäß dadurch ermöglicht, dass auf der oder jeder mobilen Einheit eine Empfangseinheit vorhanden ist, die Signale von Ankerpunkten empfängt, die stationär in der Umgebung angeordnet sind. Dabei sind die Absolutpositionen der Ankerpunkte in der Auswerteeinheit bekannt. Damit kann anhand der Signale der Ankerpunkte, die von Empfangseinheiten empfangen werden, die Absolutposition der Empfangseinheit bestimmt werden, was wiederum ein Maß für die Absolutposition der jeweiligen mobilen Einheit ist. Abhängig an der Absolutposition der Empfangseinheit und der Relativpositionen des oder der Sensoren hierzu wird in der Auswerteeinheit ein Gesamtschutzfeld gebildet, das von Schutzfeldern der Sensoren gebildet ist.

Das Gesamtschutzfeld ist damit optimal an die Umgebung angepasst und gewährleistet eine sichere Kollisions-Überwachung für die oder jede mobile Einheit.

Dabei werden Objekteingriffe in das Gesamtschutzfeld in ein Weltkoordinationssystem umgerechnet und über eine Schnittstelle ausgegeben. Die so in Weltkoordinaten generierten Objektfeststellungssignale ergeben eine exakte ortsaufgelöste Information über Schutzfeld-Verletzungen, die einer externen Einheit zur Verfügung gestellt werden können.

Im einfachsten Fall weist die Sensoranordnung nur eine mobile Einheit mit nur einem Sensor auf, dessen Schutzfeld das Gesamtschutzfeld bildet.

Besonders vorteilhaft ist nur eine mobile Einheit vorhanden, auf welcher wenigstens zwei Sensoren, eine Empfangseinheit und eine Auswerteeinheit angeordnet sind.

Dann ergänzen sich die Schutzfelder der Sensoren zum Gesamtschutzfeld.

Die erfindungsgemäße Sensoranordnung kann auch dahingehend erweitert sein, dass mehrere mobile Einheiten mit jeweils einer Empfangseinheit und wenigstens einem Sensor vorgesehen sind.

Gemäß einer vorteilhaften Ausführungsform ist der oder jeder Sensor ein Sicherheitssensor.

Der oder die Sicherheitssensoren weisen einen fehlersicheren Aufbau auf, was im einfachsten Fall durch einen redundanten Aufbau der Rechnereinheiten zur Signalauswertung realisiert werden kann. Prinzipiell können die Sensoren auch nicht fehlersicher sein, wenn die Auswerteeinheit einen fehlersicheren Aufbau aufweist.

Durch die Ausbildung der Sensoren als Sicherheitssensoren und vorteilhaft durch eine fehlersichere, vorteilhafte mehrkanalig aufgebaute Auswerteeinheit erfüllt die Sensoranordnung die normativen Anforderungen für einen Einsatz in sicherheitstechnischen Applikationen, insbesondere im Bereich des Personenschutzes.

Die Funktionsweise der so ausgebildeten Sensoranordnungen ist dann derart, dass der Sicherheitssensor bei einer Verletzung des Gesamtschutzfelds eine Sicherheitsfunktion auslöst.

Dabei kann die Sicherheitsfunktion ein Notstopp der mobilen Einheit oder eine Alarmmeldung oder ein Status einer sicheren Kommunikation sein.

Die Alarmmeldung kann mit einem optischen oder akustischen Signalgeber generiert werden.

Gemäß einer vorteilhaften Ausgestaltung der Erfindung ist eine Anordnung von stationären Kalibrierobjekten vorhanden, deren Absolutpositionen in der Auswerteeinheit gespeichert sind. Die Kalibrierobjekte werden in einem Kalibriervorgang mittels der Sensoren erfasst. Anhand der dabei ermittelten Sensorsignale wird die Relativposition der Sensoren ermittelt.

Dabei werden anhand der Sensorsignale der Sensoren bei Detektion der Kalibrierobjekte sowie der Absolutpositionen der Kalibrierobjekte und der Signale der Empfangseinheit die Absolutposition der mobilen Einheit bestimmt.

Zweckmäßig ist die Position der mobilen Einheit in Weltkoordinaten gegeben.

Zusätzlich wird die Orientierung der mobilen Einheit bestimmt durch Berechnen von Differenzen von zu unterschiedlichen Zeiten ermittelten Positionen der mobilen Einheit oder durch Verwendung eines Orientierungsmessers oder durch Erfassung des Bewegungszustands der mobilen Einheit, mittels wenigstens eines Beschleunigungssensors oder eines Wegmessers, der eine von der mobilen Einheit zurückgelegte Distanz bestimmt.

Bei der ersten Variante werden für aufeinanderfolgend bestimmte Positionen der mobilen Einheit fortlaufend Differenzwerte gebildet, wodurch die Orientierung der mobilen Einheit bestimmbar ist.

Bei der zweiten Variante wird ein Orientierungsmesser wie ein elektrischer Kompass zur Orientierungsbestimmung eingesetzt.

Gemäß der dritten Variante wird die Orientierung der mobilen Einheit mit einer oder mehreren Beschleunigungssensoren bestimmt.

Gemäß der vierten Variante wird die Orientierung der mobilen Einheit mittels eines Wegmessers wie z.B. eines Encoders bestimmt, wobei hier der zeitabhängige Verlauf der Signale des Wegmessers zur Bestimmung der Orientierung der mobilen Einheit herangezogen wird.

Vorteilhaft sind in einer Umgebung, in welcher sich die mobile Einheit bewegt, wenigstens vier Ankerpunkte vorhanden.

Diese Anzahl ist notwendig, damit mit der Methode der Multilateration die Absolutposition der Empfangseinheit bestimmt werden kann.

Weiter vorteilhaft sind in der Umgebung wenigstens zwei Kalibrierobjekte vorhanden.

Damit können mit der Methode der Multilateration die Relativpositionen zweier Sensoren, die die Kalibrierobjekte erfassen, bestimmt werden.

Gemäß einer besonders vorteilhaften Ausführungsform senden die Ankerpunkte Funksignale aus, und die Empfangseinheit weist beispielsweise einen UWB (Ultra-Wideband) Empfänger auf, der zum Empfang der Funksignale der Ankerpunkte ausgebildet ist. Auch WLAN- oder Bluetooth-Signale können genutzt werden.

Mit dem UWB-Empfänger wird eine hochgenaue Positionsbestimmung ermöglicht. Insbesondere ist hierbei die Genauigkeit erheblich höher als bei GPS-Systemen.

Ein weiterer wesentlicher Vorteil der Erfindung besteht darin, dass die Sensoranordnung auch in geschlossenen Hallen unbeschränkt einsatzfähig ist, im Gegensatz zu GPS-Systemen. Industriehallen haben oftmals metallische Dächer, so dass in den Innenräumen der Industriehallen kein GPS-Empfang gegeben ist. Im Gegensatz hierzu können bei der erfindungsgemäßen Sensoranordnung die Ankerpunkte und die Empfangseinheiten im Innenraum der Industriehalle angeordnet sein, so dass die Sensoranordnung voll funktionsfähig ist.

Gemäß einer vorteilhaften Ausführungsform der Erfindung ist von der Umgebung, in welcher sich die mobile Einheit bewegt, eine Landkarte in der Auswerteeinheit hinterlegt.

Anhand der Landkarte können in der Auswerteeinheit Bahnkurven für die mobile Einheit vorgegeben werden, insbesondere wenn die mobile Einheit ein fahrendes Transportfahrzeug bildet.

Vorteilhaft wird die Landkarte über eine Schnittstelle von einer externen Einheit eingelesen.

Über die externe Einheit sind auch Aktualisierungen der Landkarte möglich.

Wesentlich ist, dass in der Landkarte die Ankerpunkte und Kalibrierobjekte mit ihren Absolutpositionen eingetragen sind.

Die Koordinaten der Ankerpunkte und der Kalibrierobjekte werden somit in die Landkarte eingetragen.

Gleiches gilt für die anhand der mittels der Ankerpunkte und Kalibrierobjekte bestimmten Position und Orientierung der mobilen Einheit.

Besonders vorteilhaft fährt in einer Einlernphase die mobile Einheit die Umgebung entlang einer Strecke ab. Bei Fahrt der mobilen Einheit werden mittels der Sensoren nur stationäre Objekte innerhalb der Umgebung erfasst und in die Landkarte eingetragen.

Dabei ist der Auswerteeinheit eine Visualisierungskomponente zugeordnet, mittels derer stationäre Objekte auf der Landkarte anzeigbar sind.

Derartige stationäre Objekte stellen nicht sicherheitskritische Objekte dar, die durch geeignete Vorgaben von Bahnkurven von der mobilen Einheit in einem Arbeitsbetrieb, der auf die Einlernphase folgt.

In dem Arbeitsbetrieb werden dann auch Schutzfelder für die Sensoren vorgegeben, mittels derer das Gesamtschutzfeld für eine Schutzfeld-Überwachung definiert wird.

Dabei werden die Schutzfelder in der Auswerteeinheit so vorgegeben, dass keine in der Einlernphase eingelernten stationären Objekte in dem Schutzfeld vorhanden sind.

Damit wird vermieden, dass die nicht sicherheitskritischen, stationären Objekte in das Gesamtschutzfeld ragen und so zur unnötigen Auslösung einer Sicherheitsfunktion führen.

Dabei werden vorteilhaft die Schutzfelder abhängig von der Position der längs einer Bahn bewegten mobilen Einheit generiert.

Damit ist für die gesamte Fahrt der mobilen Einheit eine optimierte Schutzfeld-Anpassung derart gegeben, dass die stationären Objekte von den Schutzfeldern ausgespart werden und so nicht zu einem unnötigen Auslösen der Sicherheitsfunktion führen.

Gemäß einer vorteilhaften Ausgestaltung werden die Schutzfelder abhängig von benutzungsspezifischen Eingabegrößen konfiguriert.

Dies bedeutet, dass ein Benutzer über eine Eingabeeinheit Eingabegrößen in die Auswerteeinheit eingeben kann, um Schutzfelder zu konfigurieren.

Dabei sind vorteilhaft die Eingabegrößen von Schutzfeldgrenzen, Schutzfeldgeometrien und Schrittweiten der Schutzfeldgenerierung bei der Bewegung der mobilen Einheiten entlang einer Bahn gebildet.

Die Schrittweite gibt an, in welcher Abfolge während der Fahrt der mobilen Einheit entlang einer Bahnkurve die Schutzfelder neu konfiguriert werden.

Vorteilhaft sind von der Auswerteeinheit vorgegebene Schutzfelder mit der Visualisierungskomponente visualisierbar.

Gemäß einer vorteilhaften Weiterbildung werden in einem Arbeitsbetrieb von der Auswerteeinheit Warnfelder für die Sensoren vorgegeben.

Die Warnfelder sind vorteilhaft so dimensioniert, dass mit diesen Vorfeldern von Schutzfeldern überwacht werden, um rechtzeitig Informationen über drohende Objekteingriffe in den Schutzfeldern zu erhalten.

Die Warnfelder werden vorteilhaft in gleicher Weise wie die Schutzfelder generiert.

Gemäß einer vorteilhaften Ausführungsform ist der oder jeder Sensor ein optischer Sensor.

Insbesondere ist der optische Sensor ein Flächendistanzsensor, ein Kamerasensor oder ein Lichtschnittsensor.

Gemäß einer vorteilhaften Ausgestaltung ist die Schnittstelle eine Industrieschnittstelle.

Dabei werden vorteilhaft über die Industrieschnittstelle Daten gemäß eines TCP/IP Protokolls übertragen.

Besonders vorteilhaft ist die Datenübertragung über die Industrieschnittstelle durch ein kryptographisches Verfahren abgesichert.

Gemäß einer zweckmäßigen Weiterbildung sind mit dieser übertragene Daten auf einem Datenträger speicherbar.

Die Erfindung wird im Folgenden anhand der Zeichnungen erläutert. Es zeigen:

Figur 1:    Ausführungsbeispiel der erfindungsgemäßen Sensoranordnung.

Figur 2:    Sensoranordnung gemäß Figur 1 mit zugeordnetem Kalibrierobjekt

Figur 3:    Darstellung einer Positionsbestimmung für die Sensoranordnung gemäß Figur 2 anhand von Kalibrierobjekten.

Figur 4:    Darstellung einer Positionsbestimmung für die Sensoranordnung gemäß Figur 1 und 2 anhand von Ankerpunkten.

Figur 5:    Positionsbestimmung von Sensoren der Sensoranordnung gemäß Figur 1 und 2.

Figur 6:    Fahrt der mobilen Einheit der Sensoranordnung der Figuren 1 und 2 in einer Umgebung

a) während einer Lernfahrt.
b) während eines Arbeitsbetriebs mit einer Schutzfeld-Überwachung zu einem Zeitpunkt $t_1$.
c) während eines Arbeitsbetriebs mit einer Schutzfeld-Überwachung zu einem Zeitpunkt $t_2$ ($t_2 > t_1$).

Figur 7:    Ausführungsform der Sensoranordnung der Figuren 1 und 2 mit seiner zusätzlichen Warnfeldüberwachung.

Figur 8:    Anordnung gemäß Figur 6c mit einer alternativen Form einer Schutzfeld-Überwachung.

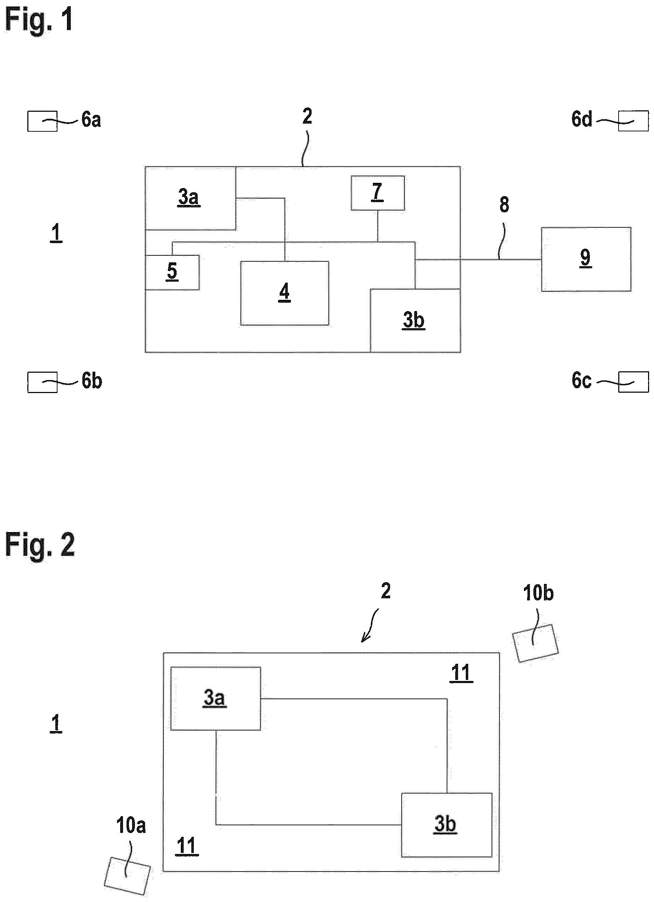

Figur 1 zeigt in Form eines Blockschaltbildes ein Ausführungsbeispiel der erfindungsgemäßen Sensoranordnung 1.

Auf einer mobilen Einheit 2, wie einem fahrerlosen Transportfahrzeug sind zwei Sensoren 3a, 3b, angeordnet, die an eine Auswerteeinheit 4 angeschlossen sind.

Die Sensoren 3a, 3b sind im vorliegenden Fall als Sicherheitssensor ausgebildet und weisen einen dementsprechend fehlersicher Aufbau auf. Vorteilhaft weist auch die Auswerteeinheit 4 einen fehlersicheren Aufbau auf, beispielsweise in Form einer mehrmaligen Rechnerstruktur. Damit erhält die Sensoranordnung 1 die Anforderungen für den Einsatz in sicherheitstechnischen Applikationen.

Die Sensoren 3a, 3b sind vorteilhaft als optische Sensoren ausgebildet. Prinzipiell können die Sensoren 3a, 3b als Kamerasensoren oder Lichtschnittsensoren ausgebildet sein.

Im vorliegenden Fall sind beide Sensoren 3a, 3b in Form eines Flächendistanzsensors, d.h. eines scannenden Distanzsensors ausgebildet. Der Flächendistanzsensor weist einen Lichtimpulse aussendenden Sender und einen Empfänger, der von einem Objekt zurückreflektierte Lichtimpulse empfängt, auf. Dem Distanzsensor ist eine Rechnereinheit zugeordnet, die vorteilhaft mehrkanalig ausgebildet ist. Mit dem Distanzsensor und der Rechnereinheit erfolgt eine Distanzbestimmung von Objekten nach einem Impulslaufzeitverfahren. Weiterhin werden die Lichtimpulse des Distanzsensors mittels einer Ablenkeinheit abgelenkt, so dass sie periodisch einen flächigen Überwachungsbereich überstreichen.

Auf der mobilen Einheit 2 ist weiterhin eine Empfangseinheit 5 angeordnet, die Signale empfängt, die von stationär angeordneten Ankerpunkten 6a bis 6d gesendet werden. Die Ankerpunkte 6a bis 6d sind in einer Umgebung, wie z.B. einer Industriehalle, positioniert, in der sich die mobile Einheit 2 bewegt.

Vorteilhaft weist die Empfangseinheit 5 einen Empfänger auf, der Funksignale von den Ankerpunkten 6a bis 6d empfängt. Die Funksignale können in Form von UWB (Ultra-Wideband), WLAN oder Bluetooth gebildet sein.

Weiterhin ist auf der mobilen Einheit 2 eine Visulisierungskomponente 7 vorgesehen, an welcher Kenngrößen der Sensoranordnung 1 visualisiert werden. Die Visualisierungskomponente 7 wird von der Auswerteeinheit 4 angesteuert. Die Komponenten der Sensoranordnung 1 auf der mobilen Einheit 2 sind über eine Schnittstelle 8 verbunden, mit der auch ein Anschluss an eine externe Einheit 9 wie der Steuerung der mobilen Einheit 2 bewerkstelligt ist.

Vorteilhaft ist die Schnittstelle 8 eine Industrieschnittstelle.

Dabei werden über die Industrieschnittstelle Daten gemäß eines TCP/IP Protokolls übertragen.

Zweckmäßig ist die Datenübertragung über die Industrieschnittstelle durch ein kryptografisches Verfahren abgesichert.

Wie Figur 2 zeigt, sind stationäre Kalibrierobjekte 10a, 10b in der Umgebung platziert. Im vorliegenden Fall sind zwei Kalibrierobjekte 10a, 10b vorgesehen. Die Kalibrierobjekte 10a, 10b können mit den Sensoren 3a, 3b der Sensoranordnung 1 erfasst werden. Das gemeinsame Sichtfeld 11 der Sensoren 3a, 3b zeigt Figur 2. Die Absolutpositionen der Ankerpunkte 6a bis 6d und der Kalibrierobjekte 10a, 10b sind in der Auswerteeinheit 4 hinterlegt.

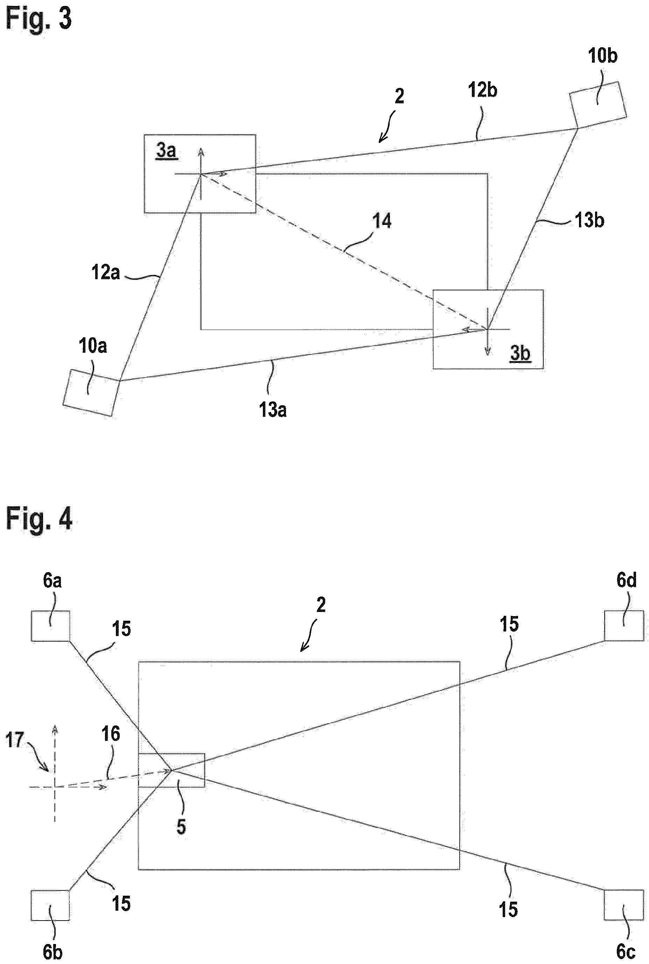

Die Relativposition der Sensoren 3a, 3b auf der mobilen Einheit 2 wird durch Erfassen der Kalibrierobjekte 10a, 10b bestimmt, wie Figur 3 zeigt.

Der Sensor 3a detektiert die Kalibrierobjekte 10a, 10b entlang der Messlinien 12a, 12b. Der Sensor 3b detektiert dieselben Kalibrierobjekte 10a, 10b entlang der Messlinien 13a, 13b. Durch Vektoraddition ergibt sich der Ortsvektor 14 des Sensors 3b im Koordinatensystem des Sensors 3a.

Spezifisch erfolgt die Positionsbestimmung wie folgt:

Sei $a$ der Ortsvektor des Kalibrierobjekts 10b im Koordinatensystem von Sensor 3a (Messlinie 12b).

Sei $b$ der Ortsvektor des Kalibrierobjekts 10b im Koordinatensystem von Sensor 3b (Messlinie 13b).

Sei außerdem $A$ eine Drehmatrix, die die Orientierung des Koordinatensystems von Sensor 3b in diejenige des Koordinatensystems von Sensor 3a überführt.

Dann ergibt sich der Ortsvektor c 14 von Sensor 3b im Koordinatensystem von Sensor 3a durch.

$$c = a - Ab.$$

Figur 4 zeigt die Positionsbestimmung der Empfangseinheit 5 und die Funkdistanzlinien 15, die diese mit den Ankerpunkten 6a bis 6d verbinden. Wenn die Ortsvektoren der Ankerpunkte 6a bis 6d bekannt sind, ergibt sich aus den gemessenen Distanzen entlang der jeweiligen Sichtlinie und dem jeweiligen Ortsvektor der Ortsvektor 16 der Empfangseinheit 5 in Weltkoordinaten 17 nach dem bekannten Verfahren der Multilateration. Im dreidimensionalen Raum sind wenigstens vier Ankerpunkte 6a bis 6d erforderlich, um dabei ein eindeutiges Ergebnis zu erhalten.

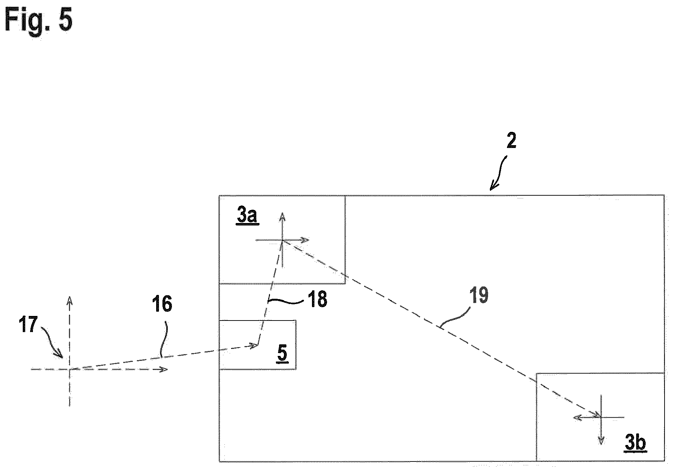

Figur 5 zeigt die Positionsbestimmung der Sensoren 3a, 3b in Weltkoordinaten 17. Der Ortsvektor 16 der Empfangseinheit 5 im Weltkoordinatensystem kann durch Trilateration bestimmt werden, der Ortsvektor 18 des Sensors 3a im Koordinatensystem der Empfangseinheit 5 ist bekannt, der Ortsvektor 19 des Sensors 3b kann aus der Kalibriermessung ermittelt werden und bleibt konstant, solange sich die Anordnung der Sensoren 3a und 3a auf der mobilen Einheit 2 nicht verändert.

Dadurch ergibt sich der Ortsvektor des Sensors 3a im Weltkoordinatensystem (Weltkoordinaten 17) durch Vektoraddition der Ortsvektoren 16,18 und es ergibt sich der Ortsvektor des Sensors 3b durch Vektoraddition der Ortsvektoren 16, 18, 19.

Vorteilhaft wird zudem die Orientierung der mobilen Einheit 2 bestimmt durch Berechnen von Differenzen von zu unterschiedlichen Zeiten ermittelten Positionen der mobilen Einheit 2 oder durch Verwendung eines Orientierungsmessers oder durch Erfassung des Bewegungszustands der mobilen Einheit 2 mittels wenigstens eines Beschleunigungssensors oder mittels eines Wegmessers, der eine von der mobilen Einheit 2 zurückgelegte Distanz bestimmt.

Weiter vorteilhaft ist von der Umgebung, in welcher sich die mobile Einheit 2 bewegt, eine Landkarte in der Auswerteeinheit 4 hinterlegt.

Zweckmäßig wird die Landkarte über eine Schnittstelle 8 von einer externen Einheit 9 eingelesen.

Dabei sind in der Landkarte die Ankerpunkte 6a bis 6d und Kalibrierobjekte 10a, 10b mit ihren Absolutpositionen eingetragen.

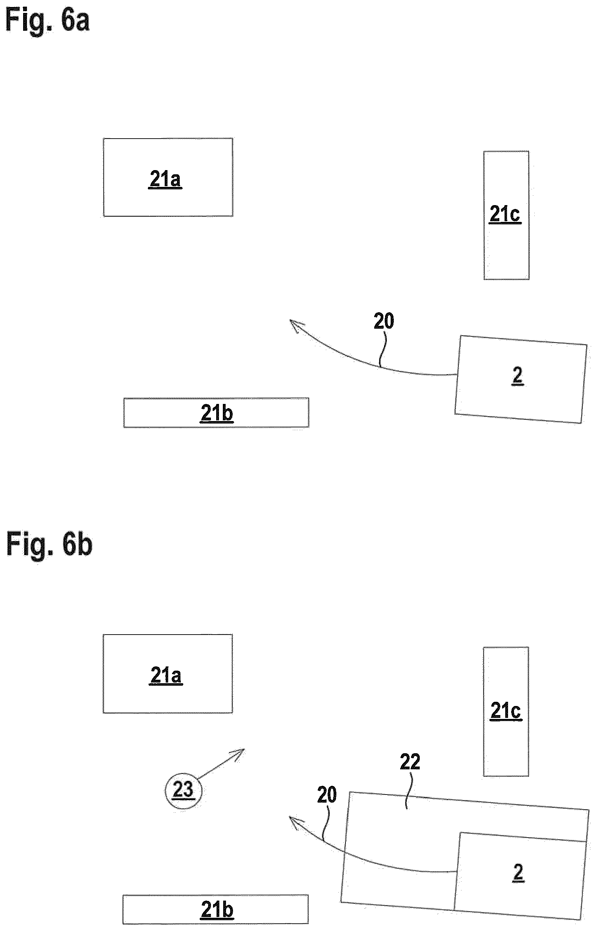

Bevor mit der Sensoranordnung 1 eine Schutzfeld-Überwachung durchgeführt wird, wird in einer Einlernphase die mobile Einheit 2 in der Umgebung entlang einer Bahnkurve 20 geführt (Figur 6a). Dabei werden stationäre nicht sicherheitskritische Objekte 21a bis 21c von den Sensoren 3a, 3b ortsaufgelöst erfasst. Die Positionen der nicht sicherheitskritischen Objekte 21 a bis 21c werden in die Landkarte eingetragen und vorteilhaft mit der Visualisierungskomponente 7 angezeigt.

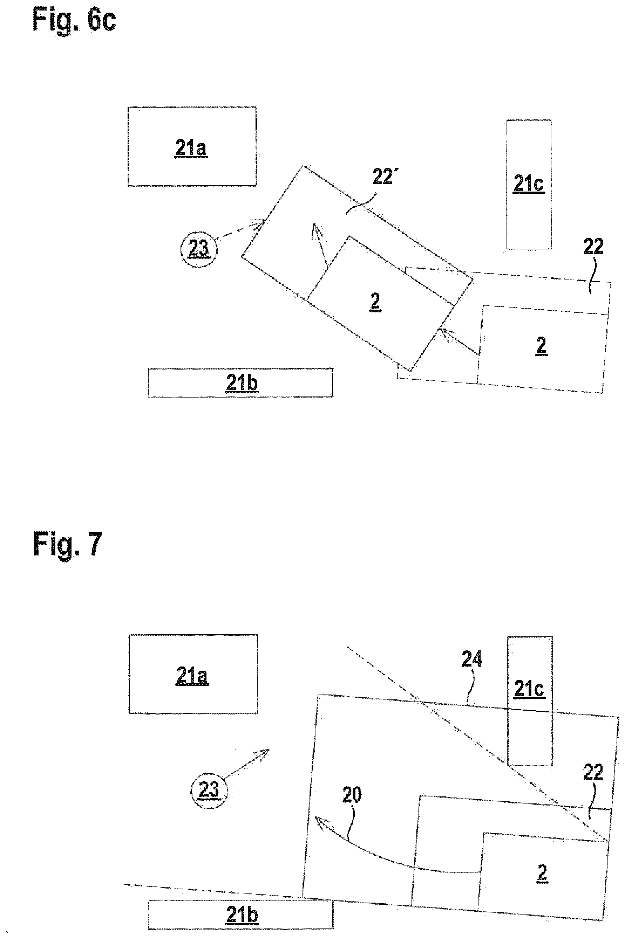

Nach der Einlernphase wird der Arbeitsbetrieb der Sensoranordnung 1 aufgenommen, in dem mit den Sensoren 3a, 3b eine Schutzfeld-Überwachung durchgeführt wird. Figur 6b zeigt eine Schutzfeld-Überwachung zu einem Zeitpunkt $t_i$, Figur 6c zeigt eine Schutzfeld-Überwachung zu einem späteren Zeitpunkt $t_2$. Dabei wird die mobile Einheit 2 wieder entlang der Bahn bewegt.

Mit der Sensoranordnung 1 wird generell ein Gesamtschutzfeld 22, 22' überwacht, das sich aus einzelnen Schutzfeldern für die Sensoren 3a, 3b zusammensetzt. Figur 6b zeigt die Situation zum Zeitpunkt $t_1$. Dort wird das Gesamtschutzfeld 22, 22' überwacht.

Figur 6c zeigt die Situation zum Zeitpunkt $t_2$. Die mobile Einheit 2 hat sich weiterbewegt. Nun wird mit der Sensoranordnung 1 das Gesamtschutzfeld 22' überwacht.

Generell werden die Schutzfelder abhängig von der Position der längs einer Bahn bewegten mobilen Einheit 2 generiert.

Vorteilhaft können die Schutzfelder abhängig von benutzungsspezifischen Eingabegrößen konfiguriert werden.

Dabei sind die Eingabegrößen von Schutzfeldradien, Schutzfeldgeometrien und Schrittweiten der Schutzfeldgenerierung bei der Bewegung der mobilen Einheiten 2 entlang einer Bahn gebildet.

Zweckmäßig sind von der Auswerteeinheit 4 vorgegebene Schutzfelder mit der Visualisierungskomponente 7 visualisierbar.

Wird mit der Sensoranordnung 1 ein Eindringen eines sicherheitskritischen Objekts 23 in das Gesamtschutzfeld 22, 22' registriert, generiert die Auswerteeinheit 4 ein entsprechendes Objektfeststellungssignal, das zur Auslösung einer Sicherheitsfunktion führt.

Dabei kann die Sicherheitsfunktion ein Notstopp der mobilen Einheit 2 oder eine Alarmmeldung sein.

Figur 7 zeigt eine Erweiterung der Ausführungsform der Figuren 6b, 6c. Zusätzlich zur Überwachung des Gesamtschutzfelds 22, 22' erfolgt mit den Sensoren 3a, 3b eine Überwachung eines Warnfelds 24. Bei Eingriff eines beweglichen sicherheitskritischen Objekts 23 in das Warnfeld 24 generiert die Auswerteeinheit 4 eine Warnmeldung.

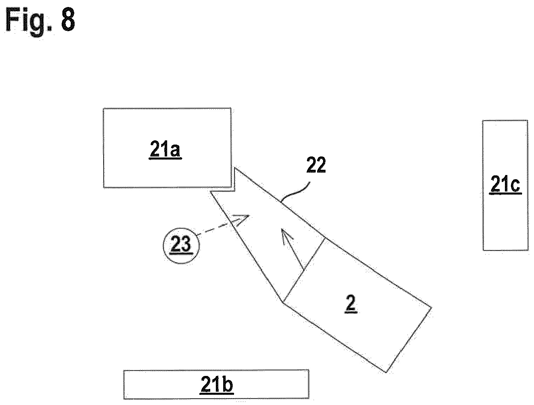

Figur 8 zeigt eine der Figur 6 entsprechende Anordnung. Die Anordnung der Figur 8 unterschiedet sich von der Anordnung gemäß Figur 6 hinsichtlich der Geometrie des Gesamtschutzfelds 22, 22'. Das Gesamtschutzfeld 22, 22' weist in diesem Fall gekrümmt verlaufende seitliche Ränder und am vorderen Ende eine Aussparung auf, damit das nicht sicherheitskritische Objekt 21a nicht in das Gesamtschutzfeld 22, 22' ragt.

Bezugszeichenliste

| (1) | Sensoranordnung |
| (2) | mobile Einheit |
| (3a, 3b) | Sensor |
| (4) | Auswerteeinheit |
| (5) | Empfangseinheit |
| (6a-6d) | Ankerpunkt |
| (7) | Visualisierungskomponente |
| (8) | Schnittstelle |
| (9) | externe Einheit |
| (10a, 10b) | Kalibrierobjekt |
| (11) | Sichtfeld |
| (12a, 12b) | Messlinien |
| (13a, 13b) | Messlinien |
| (14) | Ortsvektor |
| (15) | Funkdistanzlinie |
| (16) | Ortsvektor |
| (17) | Weltkoordinate |
| (18) | Ortsvektor |
| (19) | Ortsvektor |
| (20) | Bahnkurve |
| (21a-21c) | nicht sicherheitskritisches Objekt |
| (22, 22') | Gesamtschutzfelder |
| (23) | sicherheitskritisches Objekt |
| (24) | Warnfeld |

**Patentansprüche**

1. Sensoranordnung (1) mit wenigstens einem Sensor (3a, 3b), der zur Erfassung von Objekten innerhalb eines Schutzfelds ausgebildet ist, und mit wenigstens einer Auswerteeinheit (4) zur Auswertung von Sensorsignalen des Sensors (3a, 3b), wobei der wenigstens eine Sensor (3a, 3b), auf einer mobilen Einheit (2) angeordnet ist, **dadurch gekennzeichnet, dass** eine Anordnung von Sensoren (3a, 3b) auf einer Anordnung von mobilen Einheiten (2) vorhanden ist, dass auf der oder jeder mobilen Einheit (2) eine Empfangseinheit (5) vorhanden ist, die von stationären Ankerpunkten (6a bis 6d) emittierte Signale empfangen kann, wobei deren Absolutpositionen in der Auswerteeinheit (4) bekannt sind, so dass anhand dieser Signale die absolute Position der jeweiligen Empfangseinheit (5) in der Auswerteeinheit (4) bestimmbar ist, dass aus der absoluten Position der oder jeder Empfangseinheit (5) und den Relativpositionen des oder der Sensoren (3a, 3b) zu den Empfangseinheiten (5) in der Auswerteeinheit (4) ein Gesamtschutzfeld (22, 22'), bestehend aus Schutzfeldern des oder der Sensoren (3a, 3b) gebildet wird, und dass Objekteingriffe im Gesamtschutzfeld (22, 22') in ein Weltkoordinatensystem umgerechnet und als Objektfeststellungssignale über eine Schnittstelle (8) ausgegeben werden.

2. Sensoranordnung (1) nach Anspruch 1, **dadurch gekennzeichnet, dass** nur eine mobile Einheit (2) vorhanden ist, auf welcher wenigstens zwei Sensoren (3a, 3b), eine Empfangseinheit (5) und eine Auswerteeinheit (4) angeordnet sind.

3. Sensoranordnung (1) nach einem der Ansprüche 1 oder 2, **dadurch gekennzeichnet, dass** eine Anordnung von stationären Kalibrierobjekten (10a, 10b) vorhanden ist, wobei die Kalibrierobjekte (10a, 10b) in einem Kalibriervorgang mittels der Sensoren (3a, 3b) erfasst werden, und wobei anhand der dabei ermittelten Sensorsignale die Relativposition der Sensoren (3a, 3b) ermittelt wird.

4. Sensoranordnung (1) nach Anspruch 3, **dadurch gekennzeichnet, dass** anhand der Sensorsignale der Sensoren (3a, 3b) bei Detektion der Kalibrierobjekte (10a, 10b) und der Signale der Empfangseinheit (5) die Absolutposition der oder jeder mobilen Einheit (2) in der Auswerteeinheit (4) bestimmt wird.

5. Sensoranordnung (1) nach Anspruch 4, **dadurch gekennzeichnet, dass** die Position der mobilen Einheit (2) in Weltkoordinaten (17) gegeben ist.

6. Sensoranordnung (1) nach einem der Ansprüche 4 oder 5 **dadurch gekennzeichnet, dass** die Orientierung der mobilen Einheit (2) bestimmt wird durch Berechnen von Differenzen von zu unterschiedlichen Zeiten ermittelten Positionen der mobilen Einheit (2) oder durch Verwendung eines Orientierungsmessers oder durch Erfassung des Bewegungszustands der mobilen Einheit (2) mittels wenigstens eines Beschleunigungssensors oder eines Gyroskops oder mittels eines Wegmessers, der eine von der mobilen Einheit (2) zurückgelegte Distanz bestimmt.

7. Sensoranordnung (1) nach einem der Ansprüche 1 bis 6, **dadurch gekennzeichnet, dass** in einer Umgebung, in welcher sich die mobile Einheit (2) bewegt, wenigstens vier Ankerpunkte (6a bis 6d) vorhanden sind.

8. Sensoranordnung (1) nach einem der Ansprüche 1 bis 7, **dadurch gekennzeichnet, dass** die Ankerpunkte (6a bis 6d) Funksignale aussenden, und dass die Empfangseinheit (5) einen Empfänger aufweist, der zum Empfang der Funksignale der Ankerpunkte (6a bis 6d) ausgebildet ist, wobei die Funksignale in Form von UWB (Ultra-Wide-Band), Bluetooth oder WLAN ausgebildet sind.

9. Sensoranordnung (1) nach einem der Ansprüche 3 bis 8, **dadurch gekennzeichnet, dass** in der Umgebung wenigstens ein Kalibrierobjekt (10a, 10b) vorhanden ist.

10. Sensoranordnung (1) nach einem der Ansprüche 7 und 9, **dadurch gekennzeichnet, dass** anhand der von den Ankerpunkten (6a bis 6d) empfangenen Signale der Empfangseinheit (5) und anhand der bei der Detektion von Kalibrierobjekten (10a, 10b) generierten Sensorsignale der Sensoren (3a, 3b) Positionsbestimmungen mittels Multilateration durchgeführt werden.

11. Sensoranordnung (1) nach einem der Ansprüche 7 bis 10, **dadurch gekennzeichnet, dass** von der Umgebung, in welcher sich die mobile Einheit (2) bewegt, eine Landkarte in der Auswerteeinheit (4) hinterlegt ist.

12. Sensoranordnung (1) nach Anspruch 11, **dadurch gekennzeichnet, dass** die Landkarte über eine Schnittstelle (8) von einer externen Einheit (9) eingelesen wird.

13. Sensoranordnung (1) nach einem der Ansprüche 11 oder 12, **dadurch gekennzeichnet, dass** in der Landkarte die Ankerpunkte (6a bis 6d) und/oder Kalibrierobjekte (10a, 10b) mit ihren Absolutpositionen eingetragen sind.

14. Sensoranordnung (1) nach einem der Ansprüche 11 bis 13, **dadurch gekennzeichnet, dass** in einer Einlernphase die mobile Einheit (2) die Umgebung entlang einer Strecke abfährt, und dass bei der Fahrt der mobilen Einheit (2) mittels der Sensoren (3a, 3b) nur stationäre Objekte innerhalb der Umgebung erfasst werden und in die Landkarte eingetragen werden.

15. Sensoranordnung (1) nach Anspruch 13, **dadurch gekennzeichnet, dass** der Auswerteeinheit (4) eine Visualisierungskomponente (7) zugeordnet ist, mittels derer stationäre Objekte auf der Landkarte anzeigbar sind.

16. Sensoranordnung (1) nach einem der Ansprüche 1 bis 15 **dadurch gekennzeichnet, dass** in einem Arbeitsbetrieb von der Auswerteeinheit (4) Schutzfelder für die Sensoren (3a, 3b) vorgegeben werden.

17. Sensoranordnung (1) nach einem der Ansprüche 1 bis 16 **dadurch gekennzeichnet, dass** die Auswerteeinheit (4) eine fehlersichere Einrichtung ist.

18. Sensoranordnung (1) nach Anspruch 17 **dadurch gekennzeichnet, dass** die Auswerteeinheit (4) zweikanalig ausgeführt ist und sich diese Kanäle gegenseitig überwachen, und/oder dass die Auswerteeinheit (4) Selbsttests durchführt.

19. Sensoranordnung (1) nach einem der Ansprüche 16 bis 18 **dadurch gekennzeichnet, dass** die Schutzfelder in der Auswerteeinheit (4) so vorgegeben werden, dass keine in der Einlernphase eingelernten stationären Objekte in den Schutzfeldern vorhanden sind.

20. Sensoranordnung (1) nach einem der Ansprüche 16 bis 19 **dadurch gekennzeichnet, dass** die Schutzfelder abhängig von der Position der längs einer Bahn bewegten mobilen Einheit (2) generiert werden.

21. Sensoranordnung (1) nach einem der Ansprüche 16 bis 20 **dadurch gekennzeichnet, dass** die Schutzfelder abhängig von benutzungsspezifischen Eingabegrößen konfiguriert werden.

22. Sensoranordnung (1) nach Anspruch 21 **dadurch gekennzeichnet, dass** die Eingabegrößen von Schutzfeldgrenzen, Schutzfeldgeometrien und Schrittweiten gebildet sind und/oder dass die Bahngeschwindigkeit der beweglichen Anordnung für eine Schutzfeldgenerierung bei der Bewegung der mobilen Einheiten (2) entlang einer Bahn bestimmt wird.

23. Sensoranordnung (1) nach einem der Ansprüche 15 bis 19 **dadurch gekennzeichnet, dass** von der Auswerteeinheit (4) vorgegebene Schutzfelder mit der Visualisierungskomponente (7) visualisierbar sind.

24. Sensoranordnung (1) nach einem der Ansprüche 1 bis 22 **dadurch gekennzeichnet, dass** in einem Arbeitsbetrieb von der Auswerteeinheit (4) Warnfelder (24) für die Sensoren (3a, 3b) vorgegeben werden.

25. Sensoranordnung (1) nach einem der Ansprüche 23 und 24 **dadurch gekennzeichnet, dass** in Schutzfeldern oder Warnfeldern (24) detektierte Objekte mit der Visualisierungskomponente (7) visualisierbar sind und/oder an eine externe Einheit (9) ausgegeben werden.

26. Sensoranordnung (1) nach einem der Ansprüche 1 bis 25 **dadurch gekennzeichnet, dass** der oder jeder Sensor (3a, 3b) ein Sicherheitssensor ist.

27. Sensoranordnung (1) nach Anspruch 26 **dadurch gekennzeichnet, dass** der Sicherheitssensor bei einer Verletzung des Gesamtschutzfelds (22, 22') eine Sicherheitsfunktion auslöst.

28. Sensoranordnung (1) nach Anspruch 27 **dadurch gekennzeichnet, dass** die Sicherheitsfunktion ein Notstopp der mobilen Einheit (2), eine Alarmmeldung oder eine Kommunikationsnachricht oder eine Signalisierung ist.

29. Sensoranordnung (1) nach einem der Ansprüche 1 bis 28 **dadurch gekennzeichnet, dass** der oder jeder Sensor (3a, 3b), ein optischer Sensor ist.

30. Sensoranordnung (1) nach Anspruch 29 **dadurch gekennzeichnet, dass** der optische Sensor ein Flächendistanzsensor, ein 3D-Kamerasensor oder ein Lichtschnittsensor ist.

31. Sensoranordnung (1) nach einem der Ansprüche 1 bis 29 **dadurch gekennzeichnet, dass** die Schnittstelle (8) eine Industrieschnittstelle ist.

32. Sensoranordnung (1) nach Anspruch 31 **dadurch gekennzeichnet, dass** über die Industrieschnittstelle Daten gemäß eines TCP/IP Protokolls übertragen werden.

33. Sensoranordnung (1) nach einem der Ansprüche 31 oder 32 **dadurch gekennzeichnet, dass** die Datenübertragung über die Industrieschnittstelle durch ein kryptographisches Verfahren abgesichert ist.

34. Sensoranordnung (1) nach einem der Ansprüche 1 bis 33 **dadurch gekennzeichnet, dass** mit dieser ermittelte Daten auf einem Datenträger speicherbar sind.

35. Verfahren zum Betrieb einer Sensoranordnung (1) mit wenigstens einem Sensor (3a, 3b), der zur Erfassung von Objekten innerhalb eines Schutzfelds ausgebildet ist, und mit wenigstens einer Auswerteeinheit (4) zur Auswertung von Sensorsignalen des Sensors (3a, 3b), wobei der wenigstens eine Sensor (3a, 3b) auf einer mobilen Einheit (2) angeordnet ist, **dadurch gekennzeichnet, dass** eine Anordnung von Sensoren (3a, 3b) auf einer Anordnung von mobilen Einheiten (2) vorhanden ist, dass auf der oder jeder mobilen Einheit (2) eine Empfangseinheit (5) vorhanden ist, die von stationären Ankerpunkten (6a bis 6d) emittierte Signale empfangen kann, deren Absolutpositionen in der Auswerteeinheit (4) bekannt sind, so dass anhand dieser Signale die absolute Position oder jeweilige Empfangseinheit (5) in der Auswerteeinheit (4) bestimmbar ist, dass aus der absoluten Position der oder jeder Empfangseinheit (5) und den Relativpositionen der Sensoren (3a, 3b) zu den Empfangseinheiten (5) in der Auswerteeinheit (4) ein Gesamtschutzfeld (22, 22') bestehend aus Schutzfeldern der Sensoren (3a, 3b) gebildet wird, und dass Objekteingriffe im Gesamtschutzfeld (22, 22') in ein Weltkoordinatensystem umgerechnet und als Objektfeststellungssignale über eine Schnittstelle (8) ausgegeben werden.

# Fig. 1

# Fig. 2

**Fig. 3**

**Fig. 4**

Fig. 5

**Fig. 6a**

**Fig. 6b**

**Fig. 6c**

**Fig. 7**

Fig. 8

21a

22

23

2

21c

21b

Europäisches Patentamt
European Patent Office
Office européen des brevets

# EUROPÄISCHER RECHERCHENBERICHT

Nummer der Anmeldung

EP 23 15 6437

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/091224 A1 (KOVERMANN JAN W [FR] ET AL) 24. März 2022 (2022-03-24) * Absätze [0002], [0007], [0017], [0025], [0031], [0038], [0039], [0041]; Abbildungen 2, 3 * ----- | 1-35 | INV. G01S17/93 G01S13/931 G01S17/931 G01S7/00 G01S17/06 |
| X | DE 20 2019 106569 U1 (SICK AG [DE]) 3. März 2021 (2021-03-03) | 1,35 | G01S17/86 G01S13/86 |
| A | * Absätze [0002], [0006], [0025], [0043], [0047], [0055] * ----- | 4,9-11, 17,20 | G01S5/14 |
| A | KARFAKIS PANAGIOTIS T ET AL: "UWB Aided Mobile Robot Localization with Neural Networks and the EKF*", 2022 IEEE INTERNATIONAL CONFERENCE ON SYSTEMS, MAN, AND CYBERNETICS (SMC), IEEE, 9. Oktober 2022 (2022-10-09), Seiten 93-99, XP034229965, DOI: 10.1109/SMC53654.2022.9945357 [gefunden am 2022-11-18] * Seite 94, Spalte 1; Abbildung 3 * ----- | 6,7 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 14. Juli 2023 | Kirscher, Jérôme |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 6437

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2023

| Im Recherchenbericht angeführtes Patentdokument | Datum der Veröffentlichung | Mitglied(er) der Patentfamilie | Datum der Veröffentlichung |
|---|---|---|---|
| US 2022091224 A1 | 24-03-2022 | CA 3128082 A1 | 06-08-2020 |
| | | EP 3690473 A1 | 05-08-2020 |
| | | EP 3918360 A1 | 08-12-2021 |
| | | JP 2022520728 A | 01-04-2022 |
| | | KR 20210121187 A | 07-10-2021 |
| | | US 2022091224 A1 | 24-03-2022 |
| | | WO 2020157235 A1 | 06-08-2020 |
| DE 202019106569 U1 | 03-03-2021 | KEINE | |

Für nähere Einzelheiten zu diesem Anhang : siehe Amtsblatt des Europäischen Patentamts, Nr.12/82

EPO FORM P0461